# EUROPÄISCHE PATENTSCHRIFT

(11) **EP 1 331 790 B1**
(45) Veröffentlichungstag und Bekanntmachung des Hinweises auf die Patenterteilung: **25.10.2006**
(21) Anmeldenummer: 03000476.6
(22) Anmeldetag: 11.01.2003
(51) Int. Cl.: H04L 29/06, H04L 29/12, G06F 3/12

(54) **Netzwerkbasierte Peripheriegeräteauswahl und-Steuerung**
Network based selection and control of peripheral devices
Sélection et commande des appareils périphériques basées sur un réseau

(30) Priorität: 28.01.2002 DE 10203409
(43) Veröffentlichungstag der Anmeldung: 30.07.2003
(73) Patentinhaber: Wincor Nixdorf International GmbH, 33106 Paderborn (DE)
(72) Erfinder: Ettler, Heinrich, 33154 Salzkotten (DE); Miksic, Miran, 33104 Paderborn (DE)

(56) Entgegenhaltungen:
- WO-A-00/78002
- WO-A-01/86486
- US-A- 5 960 167
- US-A1- 2001 030 766
- SUN MICROSYSTEMS: "JINI ARCHITECTURAL OVERVIEW" INTERNET CITATION, 1999, XP002217546 Gefunden im Internet: <URL:http://www.sun.com/software/jini/whit epapers/architecture.pdf>

## Beschreibung

Die Erfindung betrifft die Steuerung von Peripheriegeräten über ein Netzwerk bei Arbeitsplätzen insbesondere im Bankenbereich.

Mit der Einführung von DV-Arbeitsplätzen in Banken wurde zunächst eine zentrale Lösung verwendet, bei der in einem 'host' genannten Zentralrechner die komplette Steuerung der Anwendung erfolgt. Am Arbeitsplatz sind nur isolierte Geräte mit geringer Verarbeitungsleistung wie Bildschirm, Tastatur und Drucker vorhanden, die über einen Multiplex-Kanal von der Anwendung im Zentralrechner angesprochen werden. Im Zentralrechner ist die Zuordnung der Geräte zueinander in einer Datenbank gespeichert. Änderungen an der Konfiguration müssen in der Datenbank ein- bzw. ausgetragen werden. Inaktive Geräte sind genauso problematisch wie vorübergehenden Konfigurationsänderungen. Die Benutzung eines Geräts durch zwei oder mehr Arbeitsplätze hingegen ist problemlos, da der Zugriff im Zentralrechner koordiniert werden kann. Die Verbindung vom Zentralrechner zum Peripheriegerät ist feststehend.

Durch die Fortschritte der Rechnertechnologie konnten die Arbeitsplätze mit immer leistungsfähigeren Mikroprozessoren ausgestattet werden, so daß ein immer größerer Teil der Steuerung durch einen Arbeitsplatzrechner übernommen werden kann. Insbesondere werden die Peripheriegeräte direkt an den Arbeitsplatz angeschlossen und stehen dann in der Regel dem Arbeitsplatz exklusiv zur Verfügung. Problematisch ist bei dieser Lösung das Konfigurationsmangagement und das Laden bzw. Aktualisieren der Arbeitsplatzrechner. Mehreren Arbeitsplätzen gemeinsame Geräte erfordern einen erheblichen Aufwand, um die Zugriffe zu synchronisieren.

Im folgenden wird eine Lösung beschrieben, bei der die Steuerung der Anwendung zentral erfolgt und von dort auf die benötigten Peripheriegeräte einfach und flexibel zugegriffen werden kann.

Es handelt sich dabei um ein Computersystem, in dem ein Anwendungsprogramm in einem Anwendungsserver auf Peripheriegeräte über ein Netzwerk zugreift. Für die Peripheriegeräte werden von einem Gerätestarter gemäß einer Konfigurationsliste Gerätesteuerprozesse gestartet und melden ihre Betriebsbereitschaft bei einem Verzeichnissserver an, wobei Netzwerkadresse, Interface und Attribute in einer Datenbank hinterlegt werden. Will das Anwendungsprogramm eine Ein- oder Ausgabe auf einem Peripheriegerät durchführen, so bestimmt es über den Verzeichnissserver einen durch Attribute und Interface bestimmten Gerätesteuerprozess und ruft diesen zur Durchführung der Ein- oder Ausgabe über das Netzwerk auf. Der Gerätesteuerprozess wird durch ein Hüllprogramm für ein mittels einer Standardschnittstelle J/XFS steuerbares Gerät bestimmt.

In der WO 00/78002 A2 ist ein Verfahren beschrieben, wie auf Geräte und Dienstleistungen innerhalb eines bestimmten geographischen Bereiches zugegriffen werden kann. Hierzu sind die Namen und Adressen dieser Geräte in einer Datenbank hinterlegt, so dass eine Suche nach einem Gerät unter geographischen Gesichtspunkten erleichtert ist. In der Druckschrift ist jedoch nicht beschrieben, wie mehrere Peripheriegeräte wie insbesonder mehrere Arbeitsplatzrecher zentral aktualisiert werden können, insbesondere bei Arbeitsplatzrechnern die über eigene leistungsstarke Mikroprozessoren verfügen.

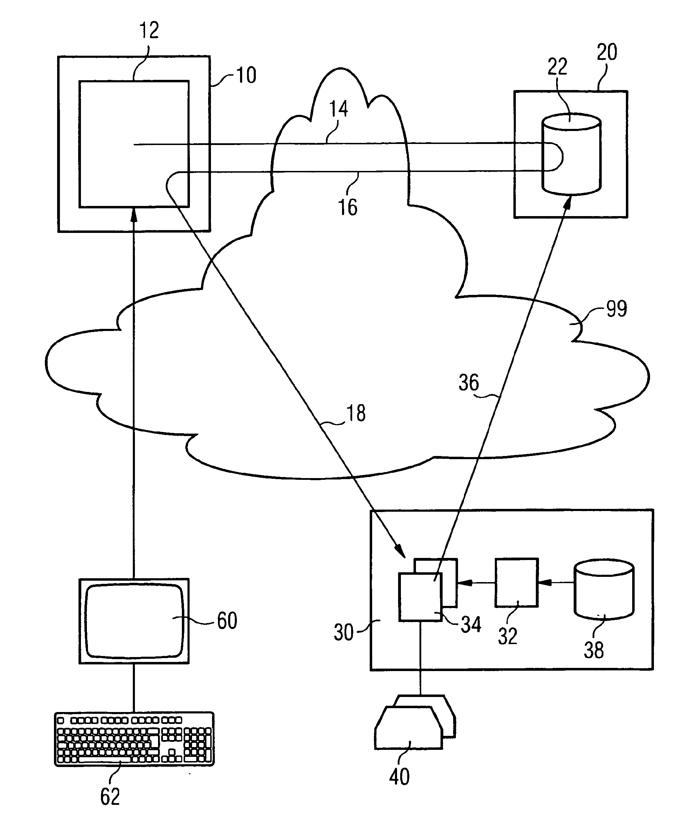

Die Erfindung wird an Hand eines Beispiels beschrieben. Die dafür verwendete Konfiguration ist in Fig. 1 schematisch dargestellt.

Vorhanden sind ein Anwendungsserver 10, ein Verzeichnisserver 20 und eine Gerätesteuerung 30. Die Gerätesteuerung 30 ist ein beliebiges Computersystem mit einem Zugang zu dem Netzwerk 99, an das Peripheriegeräte 40 angeschlossen sind. Es kann sich um einen üblichen Arbeitsplatz, beispielsweise einen Personal Computer, handeln, der noch weitere Funktionen erfüllen kann. In diesem Fall handelt es sich um an einen Arbeitsplatz angeschlossene Geräte. Es ist gleichermaßen sinnvoll, gemeinsam benutzte Peripheriegeräte an eigene Rechner anzuschließen, wenn die Arbeitsplätze nicht ständig angeschaltet sein sollen. Die von der Erfindung verwendete Technologie erlaubt es, daß ein Peripheriegerät an ein beliebtes Client-System angeschlossen werden und jederzeit mit geringem Aufwand umkonfiguriert werden kann. Daher wird im folgenden der generische Begriff "Gerätesteuerung" für alle Rechner verwendet, an die ein Peripheriegerät angeschlossen ist und die gemäß der vorliegenden Erfindung benutzt werden, unbeschadet davon, ob der Rechner weitere Dienste und Funktionen bereitstellt.

Die genannten Rechner Anwendungsserver 10, Verzeichnisserver 20 und Gerätesteuerung 30 sind durch ein Netzwerk 99, bevorzugt über IP-Protokolle, untereinander verbunden.

Die Gerätesteuerung 30 enthält einen Gerätestarter 32, der auf eine vorbestimmte Konfigurationsliste 38 zugreift. In dieser Liste sind die angeschlossenen Geräte 40 zusammen mit den im folgenden benötigten Angaben enthalten. Die Konfigurationsliste 38 kann als einfache Textdatei ausgebildet sein oder aus einer Anzahl von Einträgen in anderen Konfigurationsdatenbanken, z.B. der Windows Registry, bestehen.

Für jeden nicht gesperrten Eintrag in der Konfigurationsliste 38 wird nunmehr ein dort spezifizierter Gerätesteuerprozeß 34 durch einen Gerätestarter 32 erzeugt. Der Gerätesteuerprozeß 34 bekommt die notwendigen Parameter direkt oder über einen Verweis auf den Eintrag in der Konfigurationsliste 38. Die notwendigen Parameter enthalten insbesondere Adresse und Eigenschaften des zugehörigen Geräts 40.

Bevorzugt sind der Gerätestarter 32 und die Gerätesteuerprozesse 34 als JAVA-Programme ausgeführt, damit die nachfolgenden Schritte mittels der von der Firma Sun Microsystems entwickelten, auf JAVA basierenden, JINI-Technologie durchgeführt werden können. Ob die Gerätesteuerprozesse 34 als Threads im Kontext des Gerätestarters oder als Prozesse mit eigener virtueller JAVA-Maschine ausgeführt werden, ist hier unerheblich und, sofern nicht global vorgegeben, in der Konfigurationsliste 38 mit angegeben.

Jeder gestartete Gerätesteuerprozeß 34 meldet sich nunmehr über eine Anmeldenachricht 36 als JINI-Service bei einem Verzeichnisserver 20 an. Dieser enthält eine Datenbank 22, in der der Gerätesteuerprozeß 34 einen suchbaren Eintrag hinterläßt. Der genannte Eintrag umfaßt die Netzwerkadresse und ein serialisiertes Interface für den Aufruf des Gerätesteuerprozesses 34 mittels RMI sowie Attribute, die bei der nachfolgenden Suche nach einem speziellen Gerät verwendet werden. Die Attribute entstammen der Konfigurationsliste 38. Soweit nicht bereits über das serialisierte Interface ausreichend bestimmt, werden ferner Attribute über die Funktion des Interface mitgegeben, die bei der Codierung des Gerätesteuerprozesses 34 gegeben und fest codiert sind.

Nunmehr sei angenommen, daß ein auf dem Anwendungsserver 10 laufendes Anwendungsprogramm 12 eine Ein- oder Ausgabe auf einem speziellen Peripheriegerät wie einem Kontoauszugsdrucker, einem Sparbuch-Drucker oder einem Kartenleser durchzuführen hat. Es liegt also ein Ein-/Ausgabeauftrag für ein Peripheriegerät vor.

Durch den durchzuführenden Ein-/Ausgabeauftrag ist bereits das Interface bestimmt. Dessen Beschreibung wird in der JINI-Technologie für die Ermittlung eines passenden Gerätesteuerprozesses mit verwendet. Weiterhin können Attribute angegeben werden, um aus der Menge der überhaupt möglichen ein oder mehrere passende Geräte herauszufinden. Dazu gehören einerseits spezielle Funktionen, die sich nicht im Interface widerspiegeln. In der Regel wird auch die örtliche Lage, z.B. durch eine Raumnummer oder andere Koordinate, angegeben. Zwar wird es häufig sinnvoll sein, ein eindeutige Gerätenummer in die Attribute aufzunehmen, beispielsweise für Diagnosezwecke; diese wird jedoch in der Regel nicht zur Suche in der Datenbank 22 des Verzeichnisservers 20 verwendet.

Damit wird vermieden, daß in den Anwendungsprogrammen die Gerätnummer bzw. Geräteadresse codiert sein muß; es wird keine unmittelbare Identifikation eines bestimmten Gerätes benötigt. Vielmehr wird eine Anfrage 14 an den Verzeichnisserver 20 geschickt, die eine Codierung des Interfaces sowie die benötigten Attribute enthält. Sind mehrere passende Einträge gefunden worden, so wählt das Anwendungsprogramm, ggf. über einen Benutzerdialog, einen der Einträge aus und fordert die Aufrufinformation an, die als Antwort 16 zurückgegeben wird. Im Falle der Verwendung von JINI ist dies die JINI-Variante eines Objekts, mit dem eine 'remote method invoation', RMI, möglich ist. Dieses Objekt hat das gesuchte Interface, wird de-serialisiert und dann mit dem Interface aufgerufen. Das Interface verwendet einen RMI-Aufruf 18, um die mitgelieferten Parameter an den Gerätesteuerprozeß 34 weiterzureichen, der seinerseits das bezogene Gerät 40 entsprechend steuert.

In einer Anwendung der Erfindung verwendet das Anwendungsprogramm 12 einen Bildschirm 60 mit Tastatur 62, indem letztere auf einem Arbeitsplatzrecher realisiert sind und über das Netzwerk 99 mit dem Anwendungsprogramm kommunizieren. Bevorzugt wird hierzu ein Anzeigeprogramm ('browser') und die Markierungssprache HTML verwendet. Dieser Arbeitsplatzrechner kann völlig getrennt von der Gerätesteuerung sein, aber genausogut mit einem passenden Multi-Tasking-Betriebssystem für ein oder mehrere Geräte 40 eine Gerätesteuerung 30 sein. Für das Anwendungsprogramm 12 ist dies aber ohne Bedeutung, da sich der Gerätesteuerprozeß 34 bei dem Verzeichnisserver 20 anmeldet und die Auswahl über die dort in der Datenbank 22 gespeicherten Attribute erfolgt.

In vielen Fällen wird das Anwendungsprogramm beim Start der Anwendung die örtliche Lage des Rechners ermitteln, auf dem der 'browser' ausgeführt wird, und diese bei der Aufsuche des Geräteprozesses in der Datenbank 22 berücksichtigen. Hierzu ist es sinnvoll, über eine Metrik-Funktion den Abstand zweier solcher Angaben bestimmen zu können, um entweder immer das nächstliegende (betriebsbereite) auszuwählen oder zuerst in einer Auswahlliste auszuweisen. Die Ermittlung der örtlichen Lage kann über die Netzwerkadresse erfolgen.

Die Erfindung zeigt besondere Vorteile, wenn für die Peripheriegeräte eine standardisierte Schnittstelle vorliegt, wie es im Bankenbereich mit J/XFS der Fall ist. Der Gerätesteuerprozeß 34 wird dann durch Aktivierung eines Hüllprogramms ('wrapper') für jede Variante einer J/XFS-Schnittstelle nur einmal programmiert werden. Neue Geräte bekommen vom Gerätehersteller einen Treiber für J/XFS mitgeliefert. Die weiteren Parameter sind in der Konfigurationsliste 38 enthalten und brauchen daher in dem Hüllprogramm für den Gerätesteuerprozeß 34 nicht individuell programmiert zu werden.

Die Erfindung wurde an Hand eines Anwendungsservers, einer Gerätesteuerung und eines Verzeichnisservers beschrieben. Die Verwendung mehrerer Gerätesteuerungen ist ersichtlich ohne weiteres möglich. Weiterhin können der Anwendungsserver und der Verzeichnisserver auch von einem einzigen Server bereitgestellt werden. Alternativ können mehrere Anwendungsserver einen gemeinsamen Verzeichnisserver voraussetzen, der auch auf einem der Anwendungsserver untergebracht sein kann. Da JINI eine Methode zum Aufsuchen von Verzeichnisservern enthält, können davon auch mehrere vorhanden sein, sogar bei einem einzigen Anwendungsserver. Die Erfindung umfaßt alle diese Varianten.

## Patentansprüche

1. Verfahren für ein Computersystem mit einem Anwendungsserver (10), einer Gerätesteuerung (30) mit angeschlossenen Peripheriegeräten (40) und einem Verzeichnisserver (20), die über ein Netzwerk (99) verbunden sind, **dadurch gekennzeichnet, dass** die Gerätesteuerung (30) einen Gerätestarter (32) umfasst, der gemäß einer vorgegebenen Konfigurationsliste (38) für jedes darin aufgeführte Gerät (40) einen Gerätesteuerprozess (34) startet,
wobei jeder Gerätesteuerprozess (34) für das von ihm angesteuerte Gerät (40) einen Gerätedienst über das Netzwerk (99) bei dem Verzeichnisserver (20) mittels einer Anmedenachricht (36) anmeldet, welcher Daten zum Interface und weitere Attribute in eine Datenbank (22) einträgt, und
wobei ein Anwendungssprogramm (12) des Anwendungsservers (10), dem eine Ein-Ausgabe-Anforderung für ein Peripheriegerät (40) vorliegt,
* über das Netzwerk (99) mittels des Verzeichnisservers (20) einen passenden Gerätedienst bestimmt (14),
* dessen im Verzeichnisserver (20) gespeicherte (22) Parameter abruft (16) und
* über das Netzwerk (99) mittels der abgerufenen Parameter die Ein-Ausgabe-Anforderung an den ermittelten Gerätesteuerprozeß (34) sendet (18), und der Gerätssteuerprozeß (34) die Ein-Ausgabe-Anforderung für das Gerät (40) durchführt,
wobei der Gerätesteuerprozess (34) durch ein Hüllprogramm für ein mittels einer Standardschnittstelle J/XFS steuerbares Gerät (40) bestimmt ist.

2. Verfahren nach Anspruch 1, wobei die Konfigurationsliste Eintragungen enthält, die als Attribute in die Datenbank (22) eingetragen werden.

3. Verfahren nach Anspruch 1 oder 2, wobei der Anwendungsserver (10) über das Netzwerk (99) mit einem Arbeitsplatz (60, 62) verbunden ist, auf dem ein Anzeigeprogramm für eine Markierungssprache abläuft, welche die Dialogkomponente des Anwendungsprogramms darstellt.

4. Verfahren nach Anspruch 3, wobei der Arbeitsplatz (60, 62) zusätzlich eine Gerätesteuerung (30) umfaßt.

5. Verfahren nach Anspruch 3 oder 4, wobei die Attribute die örtliche Lage umfassen, das Anwendungsprogramm (12) die örtliche Lage des Arbeitsplatzes bestimmt und beides bei der Abfrage mittels des Verzeichnisservers (20) berücksichtigt wird.

## Claims

1. Method for a computer system having an application server (10), a device controller (30) with connected peripheral devices (40) and a directory server (20) which are connected via a network (99), **characterized in that** the device controller (30) includes a device starter (32) which starts a device control process (34) according to a given configuration list (38) for each device (40) listed therein,
wherein, for the device (40) controlled by it, each device control process (34) logs a device service onto the directory server (20) via the network (99) by means of a log-on message (36) which enters data about the interface and other attributes in a database (22),
and wherein an application program (12) of the application server (10) for which an input/output request for a peripheral device (40) is present
* determines (14) a suitable device service via the network (99) by means of the directory server (20),
* calls up (16) its parameters stored (22) in the directory server (20), and
* sends (18) the input/output request to the determined device control process (34) via the network (99) by means of the parameters called, and the device control process (34) executes the input/output request for the device (40),
wherein the device control process (34) is determined by an envelope program for a device (40) that can be controlled by means of a standard interface J/XFS.

2. Method according to Claim 1, wherein the configuration list contains entries that are entered as attributes in the database (22).

3. Method according to Claim 1 or 2, wherein the application server (10) is connected via the network (99) to a workstation (60, 62) on which a display program for a mark-up language is running which displays the dialog components of the application program.

4. Method according to Claim 3, wherein the workstation (60, 62) additionally includes a device controller (30).

5. Method according to Claim 3 or 4, wherein the attributes include the locality, the application program (12) determines the locality of the workstation, and both are taken into account in the query by means of the directory server (20).

## Revendications

1. Procédé destiné à un système informatique comportant un serveur d'application (10), une commande d'appareil (30) à laquelle sont raccordés des appareils périphériques (40) et un serveur de répertoires (20), qui sont reliés par un réseau (99), **caractérisé en ce que** la commande d'appareil (30) comporte un démarreur d'appareil (32) qui lance un processus de commande d'appareil (34) conformément à une liste de configuration prédéterminée (38) pour chaque appareil (40) de la liste,
chaque processus de commande d'appareil (34) communiquant, pour l'appareil (40) commandé par ledit processus, un service d'appareil au serveur de répertoires (20) par le réseau (99) au moyen d'un message (36) qui enregistre des données d'interface et d'autres attributs dans une base de données (22), et
un programme d'application (12) du serveur d'application (10), auquel est soumise une demande d'entrée/sortie de données pour un appareil périphérique (40),
- définissant (14) un service d'appareil approprié par le réseau (99) au moyen du serveur de répertoires (20),
- interrogeant (16) les paramètres dudit service d'appareil mémorisés (22) dans le serveur de répertoires (20) et
- envoyant (18) la demande d'entrée/sortie au processus de commande d'appareil déterminé (34) par le réseau (99) au moyen des paramètres interrogés, et le processus de commande d'appareil (34) effectuant la demande d'entrée/sortie de données pour l'appareil (40),
le processus de commande d'appareil (34) étant déterminé par un programme d'enveloppe pour un appareil (40) commandé au moyen d'une interface standard J/XFS.

2. Procédé selon la revendication 1, dans lequel la liste de configuration contient des enregistrements qui sont enregistrés comme attributs dans la base de données (22).

3. Procédé selon la revendication 1 ou 2, dans lequel le serveur d'application (10) est relié par le réseau (99) à un poste de travail (60, 62) sur lequel tourne un programme de présentation pour une langue de marquage qui représente les composants de dialogue du programme d'application.

4. Procédé selon la revendication 3, dans lequel le poste de travail (60, 62) comporte en plus une commande d'appareil (30).

5. Procédé selon la revendication 3 ou 4, dans lequel les attributs comportent l'emplacement, le programme d'application (12) définit l'emplacement du poste de travail et dans lequel les deux sont pris en compte lors de la requête au moyen du serveur de répertoires (20).
